(19) Europäisches Patentamt / European Patent Office / Office européen des brevets

(11) **EP 4 663 715 A1**

(12) **EUROPEAN PATENT APPLICATION**
published in accordance with Art. 153(4) EPC

(43) Date of publication:
**17.12.2025 Bulletin 2025/51**

(21) Application number: **23926443.5**

(22) Date of filing: **04.12.2023**

(51) International Patent Classification (IPC):
*C09K 3/10* (2006.01)     *C08L 9/00* (2006.01)
*C08L 23/08* (2025.01)     *C08L 71/00* (2006.01)
*F16J 15/10* (2006.01)

(52) Cooperative Patent Classification (CPC):
C08L 9/00; C08L 23/08; C08L 71/00; C09K 3/10;
F16J 15/10

(86) International application number:
**PCT/JP2023/043363**

(87) International publication number:
**WO 2024/185238 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2023 JP 2023032497**

(71) Applicant: **Mitsubishi Cable Industries, Ltd.**
**Chiyoda-ku**
**Tokyo 100-8303 (JP)**

(72) Inventors:
• **IEZUMI, Naofumi**
  **Amagasaki-shi, Hyogo 660-0856 (JP)**
• **YAMAMOTO, Tetsuya**
  **Arida-shi, Wakayama 649-0304 (JP)**
• **KOBIKI, Kazuhiko**
  **Amagasaki-shi, Hyogo 660-0856 (JP)**
• **ITO, Takao**
  **Amagasaki-shi, Hyogo 660-0856 (JP)**

(74) Representative: **Germain Maureau**
  **12, rue Boileau**
  **69006 Lyon (FR)**

(54) **SEAL MEMBER**

(57)     A seal member is formed by crosslinking an uncrosslinked rubber composition containing an ethylene-α-olefin-diene rubber and a compound having a perfluoropolyether backbone.

Processed by Luminess, 75001 PARIS (FR)

**Description**

TECHNICAL FIELD

The present invention relates to seal members.

BACKGROUND ART

Seal members made of fluororubber are widely known in the art. For example, Patent Document 1 discloses a seal member formed by crosslinking an uncrosslinked rubber composition containing crosslinkable fluororubber and a reactive fluorine-based compound.

CITATION LIST

PATENT DOCUMENT

PATENT DOCUMENT 1: Japanese Patent No. 5189728

SUMMARY OF THE INVENTION

The present invention provides a seal member in which an uncrosslinked rubber composition containing an ethylene-$\alpha$-olefin-diene rubber and a compound having a perfluoropolyether backbone is crosslinked.

DESCRIPTION OF EMBODIMENTS

Hereinafter, embodiments will be described in detail.

A seal member according to an embodiment is an O-ring used in, for example, a device that uses plasma, such as a semiconductor etching device or a plasma CVD device.

The seal member according to the embodiment is formed by crosslinking an uncrosslinked rubber composition containing an ethylene-$\alpha$-olefin-diene rubber (hereinafter referred to as "Component A") and a compound having a perfluoropolyether backbone (hereinafter referred to as "Component B").

According to the seal member of the embodiment, since it is formed by crosslinking an uncrosslinked rubber composition containing Component A and Component B, it is possible to achieve excellent plasma resistance and low-temperature sealing performance.

Examples of Component A include an ethylene-propylene-diene terpolymer (hereinafter "EPDM") and an ethylene-butene-diene terpolymer (hereinafter "EBT"). It is suitable that Component A contain one or both of these materials. From the standpoint of achieving excellent plasma resistance and low-temperature sealing performance, it is more suitable that Component A contain at least EBT.

Examples of the $\alpha$-olefin component in Component A include propylene and butene. From the standpoint of achieving excellent plasma resistance and low-temperature sealing performance, the $\alpha$-olefin component is suitably butene. Examples of the diene component in Component A include ethylidene norbornene, vinyl norbornene, dicyclopentadiene, and 1,4-hexadiene. From the same standpoint as that described above, the diene component is suitably ethylidene norbornene.

From the standpoint of achieving excellent plasma resistance and low-temperature sealing performance, the ethylene content in Component A is suitably 40 mass% or more and 70 mass% or less. When the $\alpha$-olefin component is propylene, the ethylene content is more suitably 55 mass% or more and 60 mass% or less. When the $\alpha$-olefin component is butene, the ethylene content is more suitably 48 mass% or more and 53 mass% or less. The ethylene content is measured based on ASTM D 3900.

When the diene component is ethylidene norbornene, the ENB content (diene content) in Component A is suitably 3 mass% or more and 10 mass% or less from the standpoint of achieving excellent plasma resistance and low-temperature sealing performance. When the $\alpha$-olefin component is propylene, the ENB content is more suitably 3.5 mass% or more and 5.5 mass% or less. When the $\alpha$-olefin component is butene, the ENB content is more suitably 6.5 mass% or more and 7.5 mass% or less. The ENB content is measured based on ASTM D 6047.

The uncrosslinked rubber composition may also contain a rubber component other than Component A, as long as Component A constitutes the main rubber component. Examples of the rubber component other than Component A include ethylene-propylene copolymer rubber (EPR), fluororubber, silicone rubber, chloroprene rubber, and hydrogenated nitrile rubber.

From the standpoint of achieving excellent plasma resistance and low-temperature sealing performance, Component B is suitably a liquid material composed of a compound having a perfluoropolyether backbone and uniformly mixed with Component A, and is more suitably a one-component liquid material.

Component B also functions as a co-crosslinking agent that crosslinks Component A by addition polymerization. From the standpoint of achieving excellent plasma resistance and low-temperature sealing performance, Component B suitably includes a plurality of alkenyl groups in the molecule. Examples of alkenyl groups include vinyl groups, allyl groups, butenyl groups, pentenyl groups, hexenyl groups, and heptenyl groups. From the same standpoint as that described above, vinyl groups are suited among these alkenyl groups. The plurality of alkenyl groups in the molecule may be either the same or different.

From the standpoint of achieving excellent plasma resistance and low-temperature sealing performance, the content of Component B in the uncrosslinked rubber composition is suitably 5 parts by mass or more and 40 parts by mass or less, more suitably 15 parts by mass or more and 35 parts by mass or less, and still more suitably 20 parts by mass or more and 30 parts by mass or less, per 100 parts by mass of Component A.

An example of a commercially available material for Component B is SIFEL manufactured by Shin-Etsu Chemical Co., Ltd. Among these, the SIFEL 3000 series is particularly suited.

The uncrosslinked rubber composition may further contain a powder filler dispersed in Component A. Examples of the powder filler include polyvinylidene difluoride (PVdF) resin fillers, carbon black, silica, silicon carbide, boron carbide, silicon nitride, and boron nitride. The powder filler suitably includes one or more of these, more suitably includes one or more selected from PVdF resin fillers, carbon black, and silica. From the standpoint of reducing particle generation even when used in a plasma environment, it is still more suitable that the power filler include a PVdF resin filler. An example of a commercially available material for a PVdF resin filler is the Kynar series manufactured by Arkema.

Examples of carbon black include MT (N990), FEF (N550), GPF (N660), and FT (N880). Carbon black suitably includes MT among these.

Examples of silica include dry-process silica such as fumed silica, and wet-process silica such as precipitated silica. Silica may be surface-treated to be hydrophobic using organochlorosilanes, organoalkoxysilanes, hexaorganodisilazanes, organosiloxane oligomers, or the like. Silica suitably includes dry-process silica among these, more suitably includes dry-process silica surface-treated to be hydrophobic using an organochlorosilane, and still more suitably includes fumed silica surface-treated to be hydrophobic using dimethyldichlorosilane.

From the standpoint of achieving excellent mechanical properties after crosslinking, the average particle size of the powder filler is suitably 0.01 $\mu$m or more and 20 $\mu$m or less, more suitably 0.1 $\mu$m or more and 18 $\mu$m or less, still more suitably 5 $\mu$m or more and 15 $\mu$m or less, and even more suitably 8 $\mu$m or more and 12 $\mu$m or less.

From the standpoint of achieving excellent mechanical properties after crosslinking, the content of the powder filler in the uncrosslinked rubber composition is suitably 1 part by mass or more and 30 parts by mass or less, more suitably 5 parts by mass or more and 15 parts by mass or less, and still more suitably 8 parts by mass or more and 12 parts by mass or less, per 100 parts by mass of Component A.

The uncrosslinked rubber composition may contain a crosslinking agent for crosslinking Component A. Examples of the crosslinking agent include organic peroxides, polyols, polyamines, and triazines. Among these, organic peroxides are suited as the crosslinking agent.

Examples of organic peroxides include dicumyl peroxide, 1,1-bis(t-butylperoxy)-3,5,5-trimethylcyclohexane, 2,5-dimethylhexane-2,5-dihydroperoxide, di-t-butyl peroxide, and t-butyl cumyl peroxide. The crosslinking agent suitably includes one or more of these, and more suitably includes dicumyl peroxide.

The content of an organic peroxide as the crosslinking agent in the uncrosslinked rubber composition is suitably 1 part by mass or more and 6 parts by mass or less, and more suitably 1.5 parts by mass or more and 5 parts by mass or less, per 100 parts by mass of Component A.

The uncrosslinked rubber composition may contain a co-crosslinking agent for crosslinking Component A in conjunction with the crosslinking agent. Examples of the co-crosslinking agent include liquid polybutadienes, amylphenol disulfide polymers, m-phenylene bismaleimide, and triallyl isocyanurate. The co-crosslinking agent suitably includes one or more of these. From the standpoint of good kneadability with Component A and achieving excellent mechanical properties after crosslinking, it is more suitable that the co-crosslinking agent include a low-viscosity liquid polybutadiene having double bonds, which serve as crosslinking points, in both the main chain and the side chains.

The liquid polybutadiene includes 1,2-addition units and 1,4-addition units. The content of the 1,2-addition units (vinyl content) in the liquid polybutadiene is suitably 1 mass% or more and 95 mass% or less, and more suitably 5 mass% or more and 70 mass% or less. The number average molecular weight of the liquid polybutadiene is suitably 2,000 or more and 15,000 or less, and more suitably 8,000 or more and 10,000 or less.

The content of the co-crosslinking agent in the uncrosslinked rubber composition is suitably 0.3 parts by mass or more and 30 parts by mass or less per 100 parts by mass of Component A. When the co-crosslinking agent is a liquid polybutadiene or m-phenylene bismaleimide, the content of the co-crosslinking agent is more suitably 5 parts by mass or more and 25 parts by mass or less. When the co-crosslinking agent is an amylphenol disulfide polymer, the content of the co-crosslinking agent is more suitably 0.5 parts by mass or more and 1.5 parts by mass or less. When the co-crosslinking agent is triallyl isocyanurate, the content of the cross-linking agent is more suitably 2 parts by mass or more and 6 parts by mass or less.

The uncrosslinked rubber composition may also contain, as necessary, other rubber compounding agents such as processing aids, antioxidants, plasticizers, vulcanization accelerators, and vulcanization acceleration aids.

The seal member according to the embodiment can be manufactured by preparing the above-described uncrosslinked rubber composition containing Component A and Component B, and then crosslinking the uncrosslinked rubber composition, that is, crosslinking Component A, which is the rubber component. Accordingly, the seal member is made of a rubber composition obtained by crosslinking the uncrosslinked rubber composition. In this case, a typical crosslinking method involves applying heat and pressure in the presence of a crosslinking agent to crosslink the uncrosslinked rubber composition. In this case, after performing a primary crosslinking process by applying heat and pressure, a secondary crosslinking process may be performed by retaining the rubber composition in a heating oven for a prescribed period of time, or a secondary crosslinking process may be performed by exposing the rubber composition to radiation. Alternatively, after performing the secondary crosslinking process by retaining the rubber composition in a heating oven for a predetermined period of time, a tertiary crosslinking process may further be performed by exposing the rubber composition to radiation.

The hardness Hs of the rubber composition forming the seal member is suitably A40 or more and A70 or less, and more suitably A50 or more and A60 or less. The hardness Hs is measured using a Type A durometer in accordance with JIS K 6253-3:2012.

The tensile strength Tb of the rubber composition forming the seal member is suitably 2 MPa or more, more suitably 5 MPa or more, and still more suitably 8 MPa or more. The elongation Eb is suitably 100% or more and 500% or less, more suitably 130% or more and 250% or less, and still more suitably 150% or more and 200% or less. The tensile stress at 100% elongation S100 is suitably 1 MPa or more and 6 MPa or less, more suitably 2 MPa or more and 5 MPa or less, and still more suitably 3 MPa or more and 4 MPa or less. The tensile strength Tb, elongation Eb, and tensile stress at 100% elongation S100 are measured in accordance with JIS K 6251:2017.

Examples

(Uncrosslinked Rubber Composition)

Uncrosslinked rubber compositions according to Examples 1 to 14 and Comparative Examples 1 and 2 were prepared. Their compositions are also shown in Table 1.

<Example 1>

EPDM (Mitsui EPT 3070, manufactured by Mitsui Chemicals, Inc., ethylene content: 58 mass%, ENB content: 4.7 mass%) was used as Component A. An uncrosslinked fluororubber composition was prepared as Example 1 by mixing and kneading 100 parts by mass of Component A with the following components: 24 parts by mass of Component B (SIFEL 3000 Series X-71-359, manufactured by Shin-Etsu Chemical Co., Ltd.), 10 parts by mass of a PVdF resin filler (Kynar MG15, manufactured by Arkema, average particle size: 10 $\mu$m), 4 parts by mass of an organic peroxide as a crosslinking agent (dicumyl peroxide), and 10 parts by mass of liquid polybutadiene 1 as a co-crosslinking agent (NISSO-PB B-3000, manufactured by Nippon Soda Co., Ltd., vinyl content: 90% or more, number average molecular weight: 3200).

<Example 2>

EBT (Metallocene EBT K-9330M, manufactured by Mitsui Chemicals, Inc., ethylene content: 50 mass%, ENB content: 7.1 mass%) was used as Component A. An uncrosslinked fluororubber composition was prepared as Example 2 by mixing and kneading 100 parts by mass of Component A with the following components: 24 parts by mass of Component B, 10 parts by mass of a PVdF resin filler, 2 parts by mass of an organic peroxide as a crosslinking agent, and 15 parts by mass of liquid polybutadiene 2 as a co-crosslinking agent (Kuraprene LBR-352, manufactured by Kuraray Co., Ltd., vinyl content: 5 to 70%, number average molecular weight: 9000).

<Example 3>

An uncrosslinked fluororubber composition having the same formulation as in Example 2 was prepared as Example 3, except that the amount of liquid polybutadiene 2 was changed to 10 parts by mass per 100 parts by mass of Component A.

<Example 4>

An uncrosslinked fluororubber composition having the same formulation as in Example 2 was prepared as Example 4, except that the amount of liquid polybutadiene 2 was changed to 20 parts by mass per 100 parts by mass of Component A.

<Example 5>

An uncrosslinked fluororubber composition having the same formulation as in Example 3 was prepared as Example 5, except that the amount of the organic peroxide as a crosslinking agent was changed to 3 parts by mass per 100 parts by mass of Component A.

<Example 6>

An uncrosslinked fluororubber composition having the same formulation as in Example 2 was prepared as Example 6, except that the amount of the organic peroxide as a crosslinking agent was changed to 3 parts by mass per 100 parts by mass of Component A.

<Example 7>

An uncrosslinked fluororubber composition having the same formulation as in Example 3 was prepared as Example 7, except that the amount of the organic peroxide as a crosslinking agent was changed to 4 parts by mass per 100 parts by mass of Component A.

<Example 8>

An uncrosslinked fluororubber composition having the same formulation as in Example 7 was prepared as Example 8, except that 10 parts by mass of carbon black MT (THERMAX N990, manufactured by Cancarb Limited, average particle size: 0.3 $\mu$m) was used in place of the PVdF resin filler, per 100 parts by mass of Component A and that 1 part by mass of an amylphenol disulfide polymer (Sanceller AP, manufactured by Sanshin Chemical Industry Co., Ltd.) as a co-crosslinking agent was used in place of liquid polybutadiene 2 as a co-crosslinking agent, per 100 parts by mass of Component A.

<Example 9>

An uncrosslinked fluororubber composition having the same formulation as in Example 8 was prepared as Example 9, except that 10 parts by mass of hydrophobic dry-process silica surface-treated with dimethyldichlorosilane (AEROSIL R972, manufactured by Evonik Industries AG, average particle size: 0.02 $\mu$m) was used in place of carbon black MT, per 100 parts by mass of Component A.

<Example 10>

An uncrosslinked fluororubber composition having the same formulation as in Example 7 was prepared as Example 10, except that 1 part by mass of an amylphenol disulfide polymer as a co-crosslinking agent was used in place of liquid polybutadiene 2 as a co-crosslinking agent, per 100 parts by mass of Component A.

<Example 11>

An uncrosslinked fluororubber composition having the same formulation as in Example 2 was prepared as Example 11, except that 10 parts by mass of m-phenylene bismaleimide (Vulnoc PM, manufactured by Ouchi Shinko Chemical Industrial Co., Ltd.) as a co-crosslinking agent was used in place of liquid polybutadiene 2 as a co-crosslinking agent, per 100 parts by mass of Component A.

<Example 12>

An uncrosslinked fluororubber composition having the same formulation as in Example 2 was prepared as Example 12, except that 4 parts by mass of triallyl isocyanurate (TAIC, manufactured by Mitsubishi Chemical Corporation) as a co-crosslinking agent was used in place of liquid polybutadiene 2 as a co-crosslinking agent, per 100 parts by mass of Component A.

<Example 13>

An uncrosslinked fluororubber composition having the same formulation as in Example 2 was prepared as Example 13, except that the amount of the PVdF resin filler was changed to 12 parts by mass per 100 parts by mass of Component A.

<Example 14>

An uncrosslinked fluororubber composition having the same formulation as in Example 2 was prepared as Example 14, except that the amount of the PVdF resin filler was changed to 18 parts by mass per 100 parts by mass of Component A.

<Comparative Example 1>

An uncrosslinked fluororubber composition having the same formulation as in Example 2, except that Component B was not used, was prepared as Comparative Example 1.

<Comparative Example 2>

An uncrosslinked fluororubber composition having the same formulation as in Example 9, except that Component B was not used, was prepared as Comparative Example 2.

[Table 1]

| | | Examples | | | | | | | | | | | | | | Comparative Examples | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 |
| Component A | EPDM | 100 | | | | | | | | | | | | | | | |
| | EBT | | 100 | 100 | 100 | 100 | 100 | 100 | 100 | 100 | 100 | 100 | 100 | 100 | 100 | 100 | 100 |
| Component B | Compound Having a Perfluoropolyether Backbone | 24 | 24 | 24 | 24 | 24 | 24 | 24 | 24 | 24 | 24 | 24 | 24 | 12 | 18 | | |
| Powder Filler | PVdF Resin Filler | 10 | 10 | 10 | 10 | 10 | 10 | 10 | | | 10 | 10 | 10 | 10 | 10 | 10 | |
| | Carbon Black MT | | | | | | | | 10 | | | | | | | | |
| | Dry-Process Silica | | | | | | | | | 10 | | | | | | | |
| Crosslinking Agent | Organic Peroxide | 4 | 2 | 2 | 2 | 3 | 3 | 4 | 4 | 4 | 4 | 2 | 2 | 2 | 2 | 2 | 4 |
| Co-Crosslinking Agent | Liquid Polybutadiene 1 | 10 | | | | | | | | | | | | | | | |
| | Liquid Polybutadiene 2 | | 15 | 10 | 20 | 10 | 15 | 10 | | | | | | 15 | 15 | 15 | |
| | Amylphenol Disulfide Polymer | | | | | | | | 1 | 1 | 1 | | | | | | 1 |
| | m-Phenylene Bismaleimide | | | | | | | | | | | 10 | | | | | |
| | Triallyl Isocyanurate | | | | | | | | | | | | 4 | | | | |

(Test Methods and Results)

Test specimens of the rubber compositions obtained by crosslinking the above uncrosslinked rubber compositions were prepared, and the following tests were conducted using the specimens. The results are shown in Tables 2 and 3.

<Hardness>

For each of Examples 1 to 14 and Comparative Examples 1 and 2, a 2 mm thick sheet-shaped rubber composition was prepared by crosslinking the respective uncrosslinked rubber composition, and three such sheets were stacked to form a test specimen. The hardness Hs was measured using a Type A durometer in accordance with JIS K 6253-3:2012, as the instantaneous value obtained when the presser foot contacted the test specimen.

<Tensile Properties>

For each of Examples 1 to 14 and Comparative Examples 1 and 2, a sheet-shaped rubber composition was prepared by crosslinking the respective uncrosslinked rubber composition, and a No. 3 dumbbell-shaped test specimen was cut out from the resulting sheet-shaped rubber composition. The tensile strength Tb, elongation at break Eb, and tensile stress at 100% elongation S100 were measured in accordance with JIS K 6251:2017.

<Plasma Resistance>

For each of Examples 1 to 13 and Comparative Examples 1 and 2, an AS-214 O-ring was prepared as a test specimen by crosslinking the respective uncrosslinked rubber composition. The test specimen was set in a plasma exposure apparatus (manufactured by Shinko Seiki Co., Ltd.). The test specimen was then exposed for 30 minutes to plasma generated under conditions of a frequency of 2.45 GHz, a pressure of 100 Pa, and a power of 1,500 W using a mixed gas obtained by mixing $O_2$ gas and $CF_4$ gas at a volume ratio of 50:1. Whether particle generation occurred during the exposure was visually checked. The mass loss rate was also calculated from the mass before and after the exposure using the following formula.

Mass loss rate (%) = {(Mass before exposure - Mass after exposure)/Mass before exposure} $\times$ 100

<He Leak Test>

For each of Examples 2, 7, and 10, as well as fluororubber and silicone rubber, an AS-214 O-ring was prepared as a test specimen by crosslinking the respective uncrosslinked rubber composition. The test specimen was set in an He leak detector (manufactured by INFICON), and the He leak rate was measured at test temperatures of 23°C and -50°C under conditions of an He flow rate of 80 ml/min and an O-ring compression rate of 25%.

[Table 2]

| | | Examples | | | | | | | | | | | | | | Comparative Examples | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 |
| Hardness Hs | | 64 | 60 | 54 | 62 | 60 | 65 | 62 | 41 | 47 | 50 | 57 | 54 | 59 | 60 | 58 | 52 |
| Tensile Properties | Tensile Strength Tb, MPa | 6.9 | 9.4 | 7.2 | 8.8 | 8.1 | 8.8 | 5.4 | 2.8 | 2.7 | 2.9 | 8.6 | 3.5 | 8.8 | 8.9 | 8.8 | 2.7 |
| | Elongation at Break Eb, % | 175 | 180 | 205 | 155 | 165 | 130 | 110 | 410 | 220 | 260 | 220 | 163 | 155 | 160 | 135 | 225 |
| | Tensile Stress at 100% Elongation S100, MPa | 3.0 | 3.4 | 2 | 4.3 | 3 | 4.7 | 4 | 0.9 | 1.2 | 1.3 | 2.4 | 1.7 | 3.4 | 3.3 | 4.2 | 1.3 |
| Plasma Resistance | Particle Generation | No | No | No | No | No | No | No | No | No | No | No | No | No | No | No | Yes |
| | Mass Loss Rate, % | 0.47 | 0.27 | 0.37 | 0.30 | 0.43 | 0.37 | 0.56 | 0.46 | 0.62 | 0.91 | 0.40 | 0.36 | 0.82 | 0.75 | 12.03 | 5.03 |

[Table 3]

| | He Leak Rate (Pa·m$^3$/s) | |
|---|---|---|
| | 23°C | -50°C |
| Example 2 | $9.4 \times 10^{-8}$ | $3.3 \times 10^{-9}$ |
| Example 7 | $8.7 \times 10^{-8}$ | $3.8 \times 10^{-9}$ |
| Example 10 | $9.5 \times 10^{-8}$ | $1.9 \times 10^{-9}$ |
| Fluororubber | $1.1 \times 10^{-7}$ | Leak |
| Silicone rubber | $1.1 \times 10^{-6}$ | $1.6 \times 10^{-7}$ |

INDUSTRIAL APPLICABILITY

The present invention is useful in the technical field of seal members.

**Claims**

1.   A seal member in which an uncrosslinked rubber composition containing an ethylene-$\alpha$-olefin-diene rubber and a compound having a perfluoropolyether backbone is crosslinked.

2.   The seal member according to claim 1, wherein the ethylene-$\alpha$-olefin-diene rubber includes an ethylene-butene-diene terpolymer.

3.   The seal member according to claim 2, wherein an ethylene content of the ethylene-butene-diene terpolymer is 48 mass% or more and 53 mass% or less.

4.   The seal member according to claim 2 or 3, wherein the ethylene-butene-diene terpolymer contains ethylidenenorbornene as a diene component, and a diene content of the ethylene-butene-diene terpolymer is 6.5 mass% or more and 7.5 mass% or less.

5.   The seal member according to any one of claims 1 to 4, wherein the compound having the perfluoropolyether backbone is a one-component liquid material.

6.   The seal member according to any one of claims 1 to 5, wherein the compound having the perfluoropolyether backbone includes a plurality of alkenyl groups in a molecule.

7.   The seal member according to any one of claims 1 to 6, wherein a content of the compound having the perfluoropolyether backbone in the uncrosslinked rubber composition is 5 parts by mass or more and 40 parts by mass or less per 100 parts by mass of the ethylene-$\alpha$-olefin-diene rubber.

8.   The seal member according to any one of claims 1 to 7, wherein the uncrosslinked rubber composition further includes a powder filler.

9.   The seal member according to claim 8, wherein the powder filler includes one or more selected from a polyvinylidene difluoride resin filler, carbon black, and silica.

10.   The seal member according to claim 8 or 9, wherein an average particle size of the powder filler is 0.01 $\mu$m or more and 20 $\mu$m or less.

11.   The seal member according to any one of claims 8 to 10, wherein a content of the powder filler in the uncrosslinked rubber composition is 1 part by mass or more and 30 parts by mass or less per 100 parts by mass of the ethylene-$\alpha$-olefin-diene rubber.

12.   The seal member according to any one of claims 1 to 11, wherein the uncrosslinked rubber composition further contains a co-crosslinking agent.

**13.** The seal member according to claim 12, wherein the co-crosslinking agent includes a liquid polybutadiene.

**14.** The seal member according to claim 13, wherein a vinyl content of the liquid polybutadiene is 5 mass% or more and 70 mass% or less.

**15.** The seal member according to claim 13 or 14, wherein a content of the liquid polybutadiene in the uncrosslinked rubber composition is 5 parts by mass or more and 25 parts by mass or less per 100 parts by mass of the ethylene-$\alpha$-olefin-diene rubber.

## INTERNATIONAL SEARCH REPORT

International application No.

**PCT/JP2023/043363**

| A. | CLASSIFICATION OF SUBJECT MATTER |
|---|---|

*C09K 3/10*(2006.01)i; *C08L 9/00*(2006.01)i; *C08L 23/08*(2006.01)i; *C08L 71/00*(2006.01)i; *F16J 15/10*(2006.01)i
FI:  C09K3/10 M; C08L71/00 A; C08L9/00; F16J15/10 Y; C08L23/08

According to International Patent Classification (IPC) or to both national classification and IPC

| B. | FIELDS SEARCHED |
|---|---|

Minimum documentation searched (classification system followed by classification symbols)

C09K3/10; C08L9/00; C08L23/08; C08L71/00; F16J15/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN); Japio-GPG/FX

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106337797 A (DONGTAI YINXIN STEEL STRUCTURE ENGINEERING CO., LTD.) 18 January 2017 (2017-01-18) claims, paragraphs [0015]-[0023], [0026]-[0090], etc. | 1, 6-11 |
| Y | JP 2005-213499 A (FREUDENBERG-NOK GENERAL PARTNERSHIP) 11 August 2005 (2005-08-11) claims, paragraphs [0010], [0030], [0039]-[0042], [0122]-[0157], etc. | 1-15 |
| Y | JP 2011-016907 A (MITSUI CHEMICALS, INC.) 27 January 2011 (2011-01-27) claims, paragraphs [0017]-[0054], [0072], [0115]-[0169], etc. | 1-15 |
| Y | JP 2021-066844 A (NOK CORPORATION) 30 April 2021 (2021-04-30) claims, paragraphs [0017]-[0060], etc. | 1-15 |
| Y | JP 2009-509012 A (CARL FREUDENBERG KG) 05 March 2009 (2009-03-05) claims, paragraphs [0032], [0035]-[0044], [0057]-[0088], etc. | 12-15 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 January 2024** | **13 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
**Information on patent family members**

International application No.

**PCT/JP2023/043363**

| Patent document cited in search report | | | Publication date (day/month/year) | Patent family member(s) | Publication date (day/month/year) |
|---|---|---|---|---|---|
| CN | 106337797 | A | 18 January 2017 | (Family: none) | |
| JP | 2005-213499 | A | 11 August 2005 | US 2005/0165168 A1 claims, paragraphs [0010], [0048]-[0051], [0143]-[0188]. etc.<br>EP 1561772 A1<br>CA 2493505 A1<br>KR 10-2005-0077038 A<br>CN 1680483 A | |
| JP | 2011-016907 | A | 27 January 2011 | (Family: none) | |
| JP | 2021-066844 | A | 30 April 2021 | (Family: none) | |
| JP | 2009-509012 | A | 05 March 2009 | US 2008/0315148 A1 claims, paragraphs [0034], [0060]-[0088], etc.<br>WO 2007/033801 A1<br>CA 2623543 A1<br>CN 101316890 A<br>KR 10-2008-0055931 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5189728 B